# EUROPEAN PATENT APPLICATION

(11) **EP 4 407 399 A1**
(43) Date of publication of application: **31.07.2024**
(21) Application number: 21958353.1
(22) Date of filing: 22.09.2021
(51) Int. Cl.: G05D 1/02, H04N 7/18

(54) **MOVING BODY AND CONTROL METHOD THEREFOR**

(71) Applicant: Fuji Corporation, Chiryu-shi, Aichi 472-8686 (JP)
(72) Inventor: KAWAGUCHI, Koji, Chiryu-shi, Aichi 472-8686 (JP); KITO, Shuichiro, Chiryu-shi, Aichi 472-8686 (JP); ODA, Takuya, Chiryu-shi, Aichi 472-8686 (JP)
(74) Representative: Grünecker Patent- und Rechtsanwälte PartG mbB
(86) International application number: PCT/JP2021/034666
(87) International publication number: WO 2023/047476

(57) **Abstract**

A moving body of the present disclosure includes an imaging device configured to image a recognition target and a recognition section configured to recognize the recognition target based on imaging data of the imaging device, is configured to perform a predetermined operation based on the recognition target recognized by the recognition section, and further includes an imaging control section configured to, when the recognition target is not recognized by the recognition section, change an imaging condition of the imaging device stepwise so that the recognition target is recognized by the recognition section, store the imaging condition when the recognition target is recognized by the recognition section in a storage device, and, when the recognition target or another recognition target is imaged by the imaging device under the same or similar situation, apply the imaging condition stored in the storage device. Accordingly, even when the surrounding environment or the like changes, the recognition target can be recognized by the moving body based on the imaging data of the imaging device, and the smooth operation of the moving body can be secured.

## Description

### Technical Field

The present disclosure relates to a moving body that recognizes a recognition target based on imaging data of an imaging device and a control method therefor.

### Background Art

Conventionally, as a robot device mounted on an automated guided vehicle, there is known a robot device including a camera that is provided in a hand section and captures an image of a workpiece set on a work table (for example, refer to Patent Literature 1). In order to recognize a shape and position of a workpiece by the camera, the robot device sequentially changes a squeezing value of a diaphragm adjustment device provided in the camera in a state where a master workpiece is photographed, and learns an optimum squeezing value corresponding to illuminance. Further, the robot device changes a parameter value in a state where the optimum squeezing value is set to the squeezing value, thereby obtaining an optimum parameter value when a feature of the master workpiece is closest to the target value in correspondence with the illuminance and storing the optimum parameter value in a memory. When recognizing the workpiece, the robot device adjusts the diaphragm adjustment device to the optimum squeezing value corresponding to the current illuminance, sets the optimum parameter value corresponding to the current illuminance as a parameter for extracting the feature, and recognizes the workpiece based on an image signal from the camera. Accordingly, the workpiece can be recognized even when brightness of a work position at which the workpiece is set varies.

### Patent Literature

Patent Literature 1: JP-A-11-272845

### Summary of the Invention

### Technical Problem

Incidentally, for example, by causing a moving body such as an autonomous mobile robot (AMR) or an automatic guides vehicle (AGV) to recognize a marker or a recognition target such as a conveyance target based on imaging data (image data) of an imaging device, it is possible to improve efficiency of conveyance of articles and the like. However, the surrounding environment of the moving body changes according to a time zone, a position of the moving body, or the like, and when the moving body cannot recognize the recognition target due to the change in the surrounding environment, the work is hindered. In addition, a place of use and a moving range of the moving body are various, and it is substantially impossible to sufficiently learn imaging conditions of the imaging device in advance.

In view of the above, a main object of the present disclosure is to cause a moving body to recognize a recognition target based on imaging data of an imaging device and ensure smooth operation of the moving body even when the surrounding environment or the like changes.

### Solution to Problem

According to an aspect of the present disclosure, there is provided a moving body including an imaging device configured to image a recognition target, and a recognition section configured to recognize the recognition target based on imaging data of the imaging device, the moving body being configured to perform a predetermined operation based on the recognition target recognized by the recognition section, the moving body further including an imaging control section configured to, when the recognition target is not recognized by the recognition section, change an imaging condition of the imaging device stepwise so that the recognition target is recognized by the recognition section, store the imaging condition when the recognition target is recognized by the recognition section in a storage device, and, when the recognition target or another recognition target is imaged by the imaging device under the same or similar situation, apply the imaging condition stored in the storage device.

In the moving body according to the present disclosure, when the recognition target is not recognized by the recognition section, the imaging condition of the imaging device are changed stepwise so that the recognition target is recognized by the recognition section, and the imaging condition when the recognition target is recognized by the recognition section is stored in the storage device. Further, when the recognition target or another recognition target is imaged by the imaging device under the same or similar situation, the imaging condition stored in the storage device is applied. Accordingly, for example, even when the surrounding environment changes, the recognition target can be recognized by the moving body based on the imaging data of the imaging device, and thus it is possible to ensure the smooth operation of the moving body without sufficiently learning the imaging condition of the imaging device in advance.

According to another aspect of the present disclosure, there is provided a control method for a moving body including an imaging device and a recognition section, the imaging device being configured to image a recognition target, and the recognition section being configured to recognize the recognition target based on imaging data of the imaging device, the control method including: changing, when the recognition target is not recognized by the recognition section, an imaging condition of the imaging device stepwise so that the recognition target is recognized by the recognition section, and storing the imaging condition when the recognition target is recognized by the recognition section in a storage device; and applying, when the recognition target or another recognition target is imaged by the imaging device under the same or similar situation, the imaging condition stored in the storage device.

According to the method, for example, even when the surrounding environment changes, the recognition target can be recognized by the moving body based on the imaging data of the imaging device, and thus it is possible to ensure a smooth operation of the moving body without sufficiently learning the imaging condition of the imaging device in advance.

### Brief Description of Drawings

Fig. 1 is a schematic configuration diagram illustrating a physical distribution center to which a moving body according to the present disclosure is applied.
Fig. 2 is a block diagram illustrating a physical distribution management system of the physical distribution center of Fig. 1.
Fig. 3 is a perspective view illustrating a wheeled platform used in the physical distribution center of Fig. 1.
Fig. 4 is a perspective view illustrating the moving body of the present disclosure.
Fig. 5 is a control block diagram of the moving body according to the present disclosure.
Fig. 6 is a flowchart illustrating a recognition procedure of a recognition target in a moving body according to the present disclosure.
Fig. 7 is a schematic diagram illustrating a modification of the moving body according to the present disclosure.

### Description of Embodiments

Next, an embodiment for carrying out the invention of the present disclosure will be described with reference to the drawings.

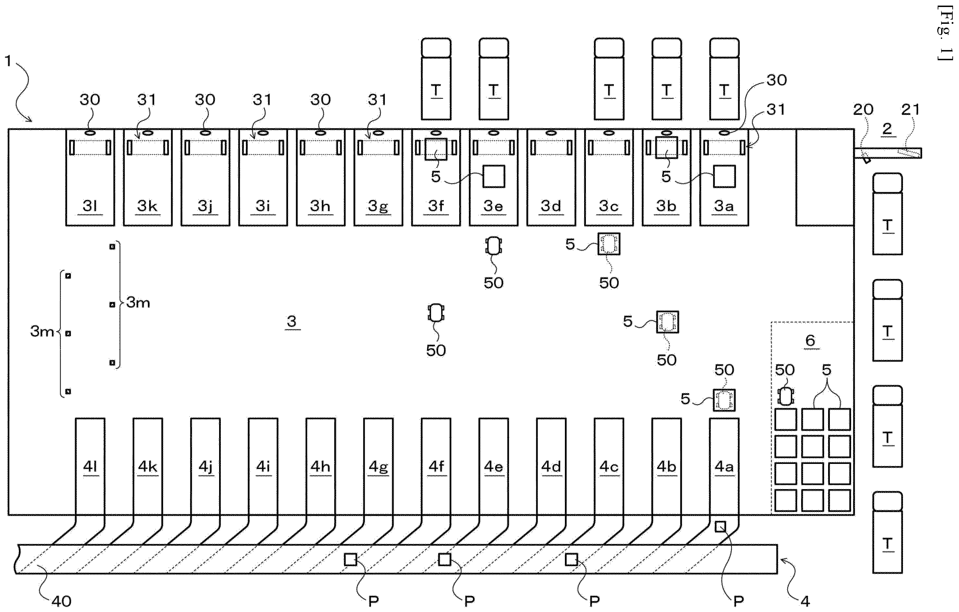

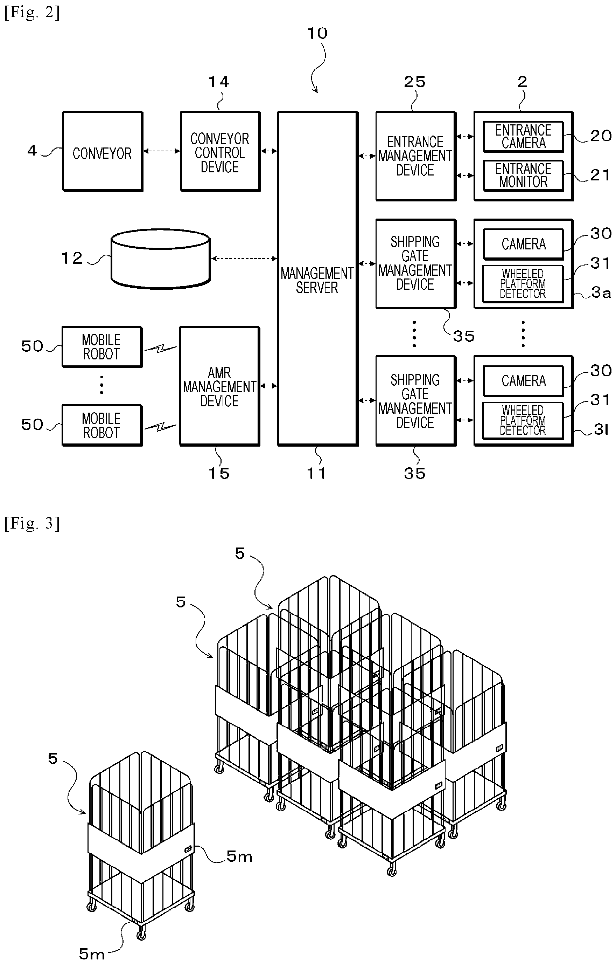

Fig. 1 is a schematic configuration diagram illustrating physical distribution center 1 to which autonomous mobile robot (AMR) 50, which is a moving body of the present disclosure, is applied, and Fig. 2 is a block diagram illustrating physical distribution management system 10 of physical distribution center 1. Physical distribution center 1 illustrated in Fig. 1 is a facility in which storage, conveyance, cargo handling, packaging, distribution processing, and the like of a package (product) are performed. As illustrated, physical distribution center 1 includes, in addition to multiple mobile robots 50, entrance 2 of delivery vehicle T such as a truck, shipping area 3 having multiple shipping gates 3a, 3b, 3c, 3d, 3e, 3f, 3g, 3h, 3i, 3j, 3k, and 31 (hereinafter, the shipping gates are collectively referred to as "shipping gates 3x" as appropriate), conveyor 4 that conveys a large number of packaged packages P from a warehouse (not illustrated) to shipping area 3, and multiple wheeled platforms 5. In physical distribution center 1, package P is conveyed to shipping area 3 by conveyor 4 and transferred to wheeled platform 5. Wheeled platform 5 as a cargo handling device on which package P is placed is conveyed to corresponding shipping gate 3x by mobile robot 50. Wheeled platform 5 on which the package P is placed is loaded on corresponding delivery vehicle T at shipping gate 3x, and is conveyed to a shipping destination by delivery vehicle T.

In entrance 2 of physical distribution center 1, entrance camera 20 for imaging delivery vehicle T arriving at entrance 2, monitor 21 for visually providing various kinds of information to a driver of delivery vehicle T, and entrance management device 25 (refer to Fig. 2) are installed. Entrance management device 25 is a computer including CPU, ROM, RAM, a storage device, a communication module, and the like, and acquires an ID of delivery vehicle T arriving at entrance 2 based on the imaging data (image data) of entrance camera 20. That is, entrance camera 20 and entrance management device 25 function as an ID acquisition device of entrance 2. In the present embodiment, the ID of delivery vehicle T is, for example, a number assigned in advance to delivery vehicle T from physical distribution center 1, and a marker (not illustrated) indicating the ID is attached to delivery vehicle T so as to be recognizable from entrance camera 20. However, the ID of delivery vehicle T may be an automobile registration number of delivery vehicle T or a number of an in-vehicle device such as an ETC acquired via a communication device (not illustrated). Further, entrance management device 25 causes monitor 21 to display information to be provided to the driver.

Each of shipping gates 3a to 31 is provided with camera 30 that images delivery vehicle T that has arrived at shipping gates 3a to 31, wheeled platform detector 31 that can image wheeled platform 5 that passes when being loaded on delivery vehicle T, and shipping gate management device 35 (refer to Fig. 2). Shipping gate management device 35 is a computer including CPU, ROM, RAM, a storage device, a communication module, and the like, and acquires the ID of delivery vehicle T that has arrived at shipping gate 3a, 3b, ..., or 31 based on imaging data (image data) of camera 30. That is, camera 30 and shipping gate management device 35 function as delivery vehicle ID acquisition devices in each of shipping gates 3a to 31. In addition, shipping gate management device 35 acquires the ID of wheeled platform 5 loaded on delivery vehicle T based on the imaging data (image data) of wheeled platform detector 31. That is, wheeled platform detector 31 and shipping gate management device 35 function as the wheeled platform ID acquisition device in each of shipping gates 3a to 31.

Conveyor 4 includes main conveyance line 40 and multiple shipping lines 4a, 4b, 4c, 4d, 4e, 4f, 4g, 4h, 4i, 4j, 4k, and 4l branched from main conveyance line 40 so as to face the corresponding one of shipping gates 3a to 31 (hereinafter, the shipping lines are collectively referred to as a "shipping line 4x" as appropriate). Conveyor 4 is controlled by conveyor control device 14 (refer to Fig. 2) which is a computer including CPU, ROM, RAM, a storage device, a communication module, and the like. A bar code seal indicating the ID is attached to package P handled in physical distribution center 1, and conveyor control device 14 controls conveyor 4 based on the ID of package P. That is, conveyor control device 14 acquires the ID of package P on main conveyance line 40 via a barcode reader (not illustrated), and causes conveyor 4 to sort package P conveyed to shipping area 3 by main conveyance line 40 to corresponding shipping line 4x based on the acquired ID.

Wheeled platform 5 is a so-called basket wheeled platform as illustrated in Fig. 3, and includes marker 5m as a recognition target such as an AR marker, a QR code, or a barcode indicating the ID of wheeled platform 5. Marker 5m is provided at least one position (two positions in the example of Fig. 3) of wheeled platform 5 so as to be recognizable by mobile robot 50 and wheeled platform detector 31. In physical distribution center 1, as illustrated in Fig. 1, storage location (arrangement location) 6 is secured in shipping area 3. Unused wheeled platform 5 is arranged to be aligned at storage location 6, and wheeled platform 5 which is the use target is identified by mobile robot 50 and conveyed from storage location 6 to the designated position. Further, multiple markers 3m, which are recognition targets such as the AR marker and QR code for causing each mobile robot 50 to autonomously travel, are attached to the floor surface, columns, and the like of shipping area 3 in the building of physical distribution center 1.

As illustrated in Fig. 2, physical distribution management system 10 includes management server 11 as management device and storage device 12. Management server 11 is a computer including CPU, ROM, RAM, a communication module, and the like. Management server 11 acquires various types of information from entrance management device 25 and shipping gate management devices 35 of shipping gates 3a to 31, and transmits requested information and command signals to entrance management device 25 and shipping gate management devices 35. Further, management server 11 transmits the ID of package P and information necessary for sorting package P to conveyor control device 14, and exchanges information with AMR management device 15. AMR management device 15 is a computer including CPU, ROM, RAM, a storage device, a communication module, and the like, and manages multiple mobile robots 50 by exchanging information with multiple mobile robots 50 via wireless communication.

Storage device 12 of physical distribution management system 10 stores a delivery database in which information related to delivery of package P is stored for each of multiple delivery vehicles T to which IDs are assigned from physical distribution center 1. The delivery database stores, in the ID of delivery vehicle T, the ID of package P loaded on delivery vehicle T, the shipping destination of package P, and the ID of shipping gate 3x (hereinafter, referred to as a "loading gate 3z" as appropriate) at which loading on delivery vehicle T is performed in link with (in association with) each other. Further, storage device 12 stores area information including a movable area and a movement prohibited area of mobile robot 50 in shipping area 3 (physical distribution center 1), identification mark information of each area, position information of marker 3m, a time zone in which movement is prohibited, and the like.

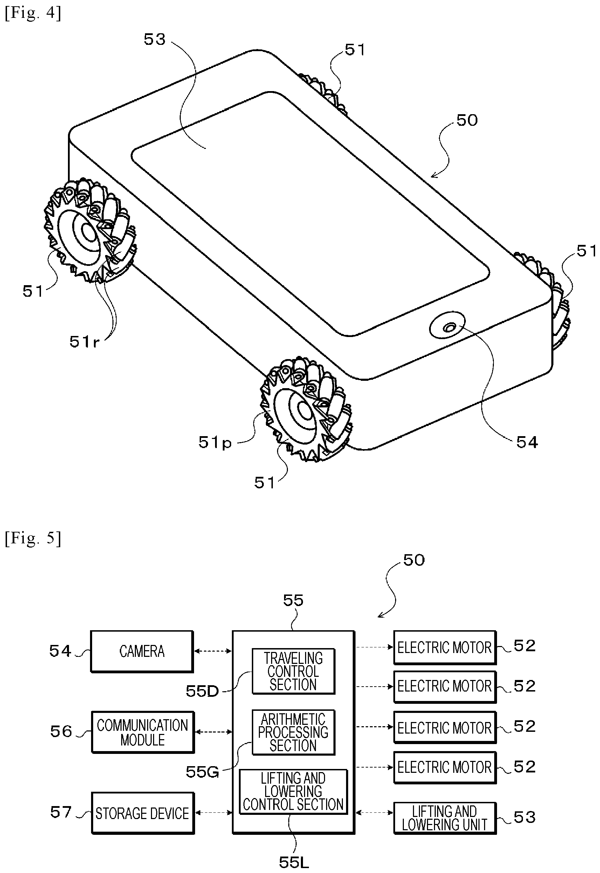

Fig. 4 is a perspective view illustrating mobile robot 50, and Fig. 5 is a control block diagram of mobile robot 50. As illustrated in Figs. 4 and 5, mobile robot 50 includes multiple (four) mecanum wheels 51, multiple (four) electric motors 52 for rotationally driving corresponding mecanum wheels 51, and lifting and lowering unit 53 for lifting and lowering wheeled platform 5, and is configured to be movable forward and backward below wheeled platform 5. Each mecanum wheel 51 includes pair of support plates 51p, and multiple rollers 51r which are supported by pair of support plates 51p so as to be arranged in an annular shape and which are rotatable about an axis inclined by 45° with respect to an axle. Accordingly, by controlling the rotation directions and the rotation speeds of multiple electric motors 52, it is possible to move mobile robot 50 in all directions, and to spin turn, pivot turn, or power turn mobile robot 50. Lifting and lowering unit 53 includes a support member that supports wheeled platform 5, and a drive device that lifts and lowers the support member with respect to the main body of mobile robot 50 so that each wheel of wheeled platform 5 is separated from a traveling road surface or is grounded on the traveling road surface.

Mobile robot 50 further includes camera 54 serving as an imaging device, control device 55, communication module 56 provided for communication (wireless communication) with AMR management device 15 and other mobile robots 50, and storage device 57. Camera 54 images the surroundings of mobile robot 50 and transmits imaging data (image data) to control device 55. Control device 55 is a computer including CPU, ROM, RAM, and the like. As illustrated in Fig. 5, arithmetic processing section 55G, traveling control section 55D, and lifting and lowering control section 55L are configured in control device 55 by cooperation between hardware such as CPU, ROM, and RAM and various programs installed in advance.

Arithmetic processing section 55G of control device 55 uses a VSLAM technology (self-location estimation technology), acquires the self-location (three-dimensional coordinates) in shipping area 3 (physical distribution center 1) of mobile robot 50 and the environment map based on the imaging data of camera 54 at predetermined time intervals (very short time) during traveling of mobile robot 50, and stores the self-location and the environment map in storage device 57. In addition, arithmetic processing section 55G can recognize (identify) marker 3m of shipping area 3 and marker 5m of wheeled platform 5 (the ID of wheeled platform 5) from the imaging data of camera 54, and can recognize (identify) the target object itself such as wheeled platform 5. Further, arithmetic processing section 55G recognizes marker 3m arranged in shipping area 3 during traveling of mobile robot 50, and corrects the estimated self-location and the environment map based on the position of marker 3m determined in advance. Arithmetic processing section 55G can adjust sensitivity (gain of the imaging element) and the exposure time (shutter speed) of camera 54. Further, arithmetic processing section 55G stores the imaging conditions of camera 54, that is, the sensitivity and the exposure time when the recognition targets such as markers 3m and 5m can be normally recognized from the imaging data of camera 54 in storage device 57 in association with the situation information, that is, the place (ID) of marker 3m or the like, the time zone and the season in which marker 3m or the like is imaged.

Traveling control section 55D of control device 55 controls multiple electric motors 52 based on the self-location (current position), the environment map, and the like acquired by arithmetic processing section 55G. Further, lifting and lowering control section 55L causes lifting and lowering unit 53 to lift or lower wheeled platform 5 when mobile robot 50 is positioned below wheeled platform 5. Arithmetic processing section 55G of control device 55 may be configured to acquire the self-location and the environment map by the SLAM technology using 2D or 3D LiDAR (laser sensor) or the like, may be configured to estimate the self-location based only on the position of the marker, or may be configured to acquire the self-location and the environment map by indoor positioning technology using a beacon or the like. Further, mobile robot 50 may include a wheel including a general rubber tire, which includes a wheel other than the mecanum wheel.

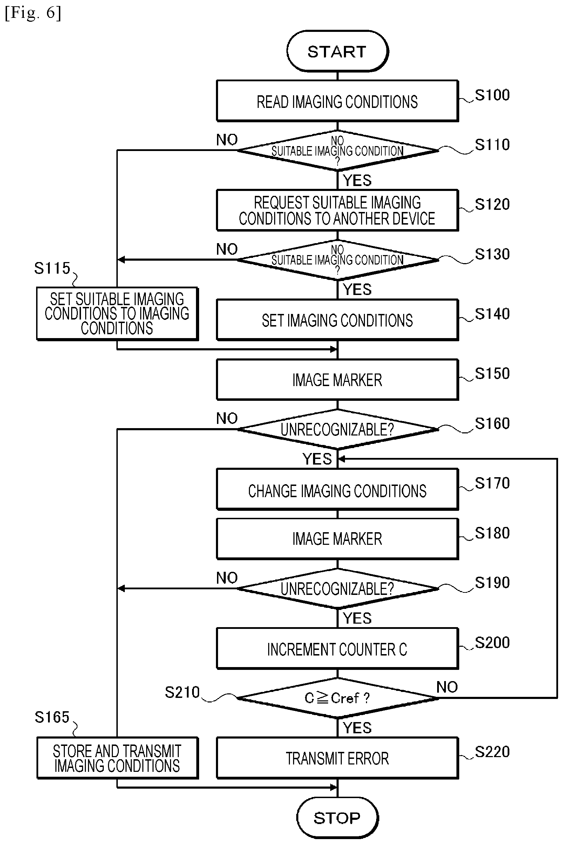

Here, shipping area 3 of physical distribution center 1 in which mobile robot 50 is used has a large area, and the way of sunshine varies depending on the location. Accordingly, the surrounding environment of mobile robot 50 changes according to the time zone, the position of mobile robot 50 in shipping area 3, or the like, and mobile robot 50 cannot recognize markers 3m, 5m, or the like as the recognition target due to the change in the surrounding environment, which may hinder operations such as estimating the self-location and conveying wheeled platform 5 using the result of estimating the self-location. Meanwhile, there are various moving ranges of mobile robot 50, and it is substantially not possible to sufficiently learn the imaging conditions of camera 54 as an imaging device in advance. In view of this, mobile robot 50 recognizes markers 3m, 5m, and the like according to the procedure illustrated in Fig. 6 in order to suppress the recognition failure of markers 3m, 5m, and the like. Hereinafter, a series of processing illustrated in Fig. 6 will be described by taking, as an example, a case where, when mobile robot 50 conveys wheeled platform 5 from any one of shipping lines 4x to corresponding shipping gate 3x, marker 3m as a recognition target attached to a floor surface, a column, or the like of shipping area 3 is recognized.

In physical distribution center 1, when delivery vehicle T arrives at entrance 2, management server 11 determines shipping gate 3x serving as loading gate 3z, and transmits necessary information such as the ID of shipping gate 3x to AMR management device 15. AMR management device 15 transmits necessary information including the ID of shipping gate 3x serving as loading gate 3z to corresponding mobile robot 50, and reflects shipping gate 3x serving as the target point in the traveling route of mobile robot 50. Mobile robot 50 that has received the information from AMR management device 15 recognizes (identifies) wheeled platform 5 having the corresponding ID from the imaging data of camera 54, travels based on the self-location estimated by arithmetic processing section 55G, and conveys wheeled platform 5 to shipping gate 3x.

In a case where mobile robot 50 travels in shipping area 3 as described above, when arithmetic processing section 55G of control device 55 of mobile robot 50 determines that the self-location of mobile robot 50 estimated based on the imaging data of camera 54 is included in the range in which any marker 3m in shipping area 3 can be imaged, arithmetic processing section 55G reads the imaging conditions (sensitivity and exposure time) of camera 54 stored from storage device 57 (Step S100). Further, arithmetic processing section 55G determines whether imaging conditions (hereinafter, referred to as "suitable imaging conditions") under which marker 3m can be normally recognized from the imaging data of camera 54 in the same time zone as the current time is included in the read imaging conditions (Step S 110).

When it is determined that the suitable imaging conditions are not included in the imaging conditions stored in storage device 57 (Step S110: YES), arithmetic processing section 55G requests another mobile robot 50 and AMR management device 15 (another device) to transmit the suitable imaging conditions (Step S120), and determines whether the suitable imaging conditions can be received from the other mobile robot 50 or the like (Step S130). When it is determined that the suitable imaging conditions cannot be received from the other mobile robot 50 or the like (Step S130: YES), arithmetic processing section 55G sets the predetermined initial conditions as the imaging conditions of camera 54 (Step S140). In the present embodiment, the initial conditions set in Step S140 are, for example, minimum values of the sensitivity and the exposure time of camera 54. Further, arithmetic processing section 55G causes camera 54 to image marker 3m (Step S150), acquires the imaging data of camera 54, and determines whether marker 3m can be normally recognized from the imaging data (Step S160).

When arithmetic processing section 55G determines that marker 3m can be normally recognized from the imaging data of camera 54 (Step S160: NO), arithmetic processing section 55G stores the imaging conditions set in Step S140 in storage device 57 in association with the situation information (location, time zone, and season), transmits the imaging conditions (associated with location, time zone, and the like) to AMR management device 15 (Step S165), and temporarily ends the series of processing of Fig. 6. AMR management device 15 stores the imaging conditions from mobile robot 50 in the storage device of AMR management device 15, and transmits the suitable imaging conditions to corresponding mobile robot 50 when the suitable imaging conditions corresponding to the request in Step S120 exist among the imaging conditions stored in the storage device.

When it is determined that marker 3m cannot be normally recognized from the imaging data of camera 54 (Step S160: YES), arithmetic processing section 55G changes the imaging conditions of camera 54 (Step S170). In Step S170 of the present embodiment, when the initial conditions are set to the imaging conditions in Step S140, arithmetic processing section 55G increases the sensitivity and the exposure time by predetermined values, respectively. After the processing of Step S170, arithmetic processing section 55G causes camera 54 to image marker 3m again (Step S180), acquires the imaging data of camera 54, and determines whether image marker 3m can be normally recognized from the imaging data (Step S190).

When it is determined that marker 3m cannot be normally recognized from the imaging data of camera 54 although the imaging conditions are changed in Step S170 (Step S190: YES), arithmetic processing section 55G increments counter C (Step S200) and then determines whether counter C is equal to or greater than a predetermined threshold Cref (a relatively large positive value) (Step S210). When it is determined that counter C is less than the threshold Cref (Step S210: NO), arithmetic processing section 55G repeatedly executes the processing of Steps S170 to S210. Accordingly, the imaging conditions of camera 54 are changed stepwise until it is determined in Step S190 that marker 3m can be normally recognized from the imaging data of camera 54.

When it is determined that marker 3m can be normally recognized from the imaging data of camera 54 (Step S190: NO), arithmetic processing section 55G stores the imaging conditions set in the most recent Step S170 in storage device 57 and transmits the imaging conditions to AMR management device 15 (Step S165) to temporarily end the series of processing of Fig. 6. Note that, although it is an extremely rare case, when it is determined in Step S210 that counter C is equal to or greater than the threshold Cref, arithmetic processing section 55Gtransmits a signal indicating that an error occurs to AMR management device 15 (Step S220), temporarily ends the series of processing of Fig. 6, and stops the travel of mobile robot 50 (conveyance of wheeled platform 5).

Meanwhile, when it is determined in Step S110 that the suitable imaging conditions are included in the imaging conditions stored in storage device 57 (Step S110: NO), arithmetic processing section 55G sets the suitable imaging conditions as the imaging conditions of camera 54 (Step S115), and executes the processing of Step S150 and thereafter. When it is determined in Step S130 that the suitable imaging conditions can be received from the other mobile robot 50 or the like (Step S130: NO), arithmetic processing section 55G sets the suitable imaging conditions as the imaging conditions of camera 54 (Step S115), and executes the processing of Step S150 and thereafter. When arithmetic processing section 55G determines that marker 3m can be normally recognized from the imaging data of camera 54 after the processing of Step S115 (Step S160: NO), arithmetic processing section 55G stores the imaging conditions set in Step S115 in storage device 57 in association with the situation information (location, time zone, and season), transmits the imaging conditions to AMR management device 15 (Step S165), and temporarily ends the series of processing of Fig. 6.

When it is determined that marker 3m cannot be normally recognized from the imaging data of camera 54 after the processing of Step S115 (Step S160: YES), arithmetic processing section 55G changes the imaging conditions of camera 54 (Step S170). When the suitable imaging conditions are set as the imaging conditions in Step S115, in Step S170, arithmetic processing section 55G increases, for example, the sensitivity and the exposure time by respective predetermined values from the values in the suitable imaging conditions, and when marker 3m still cannot be recognized, arithmetic processing section 55G reduces the sensitivity and exposure time by respective predetermined values from the values of the suitable imaging conditions. When arithmetic processing section 55G determines that marker 3m can be normally recognized from the imaging data of camera 54 after the processing of Step S115 (Step S190: NO), arithmetic processing section 55G stores the imaging conditions set in the most recent Step S170 in storage device 57, transmits the imaging conditions to AMR management device 15 (Step S165), and temporarily ends the series of processing of Fig. 6.

As described above, in mobile robot 50, when arithmetic processing section 55G serving as the recognition section cannot recognize marker 3m or the like serving as the recognition target, arithmetic processing section 55G serving as the imaging control section changes the imaging conditions of camera 54 serving as the imaging device in a stepwise manner so that marker 3m or the like is recognized (Steps S150 to S210). In addition, arithmetic processing section 55G stores the imaging conditions when marker 3m or the like is recognized in storage device 57 (Step S165). Further, in mobile robot 50, when the same marker 3m or the like is imaged by camera 54 in the same place and in the same time zone, that is, in the same or similar situation, the imaging conditions (suitable imaging conditions) stored in storage device 57 is applied (Steps S100 to S115).

Accordingly, for example, even when the surrounding environment changes, arithmetic processing section 55G of mobile robot 50 can recognize marker 3m or the like as the recognition target based on the imaging data (image data) of camera 54. As a result, even when the imaging conditions of camera 54 are not sufficiently trained in advance, the smooth operation of mobile robot 50 can be ensured. It is needless to say that the above-described suitable imaging conditions may be applied when camera 54 images another recognition target (for example, a structure to which marker 3m is attached) different from the previous recognition target (for example, marker 3m) in the same place and in the same time zone.

In addition, when marker 3m or the like as the recognition target is not recognized even when the imaging conditions (suitable imaging conditions) stored in storage device 57 are applied, arithmetic processing section 55G serving as the imaging control section changes the imaging conditions of camera 54 so that marker 3m or the like is recognized (Steps S115 and S150 to S210), and stores the imaging conditions when marker 3m or the like is recognized in storage device 57 (Step S165). Accordingly, it is possible to more favorably deal with a change in the surrounding environment of mobile robot 50.

Further, arithmetic processing section 55G of control device 55 estimates the self-location of mobile robot 50 based on recognized marker 3m. In mobile robot 50 including control device 55, for example, even when the surrounding environment changes, the recognition target can be recognized, and thus, mobile robot 50 can be smoothly moved from any shipping line 4x (departure point) to any shipping data 3x (target point). However, it is needless to say that the recognition target of mobile robot 50 is not limited to marker 3m arranged in shipping area 3 (the movable area of mobile robot 50), and may be a structure (stationary object) arranged in shipping area 3.

In the above embodiment, the imaging conditions of camera 54 includes at least the sensitivity and the exposure time of camera 54. Accordingly, when marker 3m which the recognition target or the like is not recognized by arithmetic processing section 55G, it is possible to change the imaging conditions stepwise and cause arithmetic processing section 55G to recognize marker 3m or the like. However, when camera 54 includes a light emitting device, the imaging conditions of camera 54 may include settings (ON/OFF, light emission timing) of the light emitting device.

Further, in the above embodiment, the imaging conditions (suitable imaging conditions) when marker 3m as the recognition target is recognized by arithmetic processing section 55G as the recognition section of any one of the mobile robots 50 are shared by the other mobile robot 50 (Steps S120 to S130 and S115). Accordingly, it is possible to efficiently perform the work using multiple mobile robots 50.

Mobile robot 50 recognizes marker 5m as the recognition target attached to wheeled platform 5 and supports and conveys wheeled platform 5. Accordingly, mobile robot 50 may be used not only for physical distribution center 1 but also for conveying an empty wheeled platform or a wheeled platform carrying a package in a backyard of a retail store such as a shopping center, or may be used for conveying the package itself.

Further, mobile robot 50 travels on a route to a target point while recognizing multiple markers 3m arranged in the building of physical distribution center 1. Accordingly, mobile robot 50 may be used in, for example, a shopping center other than physical distribution center 1. In the shopping center, for example, mobile robot 50 on which featured goods, special price goods, and the like are placed may autonomously travel at a low speed along a predetermined route while multiple markers 3m arranged in the store are recognized, or mobile robot 50 on which special price goods and the like are placed may autonomously travel to, for example, a position in front of a checkout counter in response to the arrival of the time sale execution timing or the like. Multiple markers 3m are not limited to being arranged in the building of physical distribution center 1, and may be arranged outside the building (or at the boundary between the inside and the outside) of physical distribution center 1.

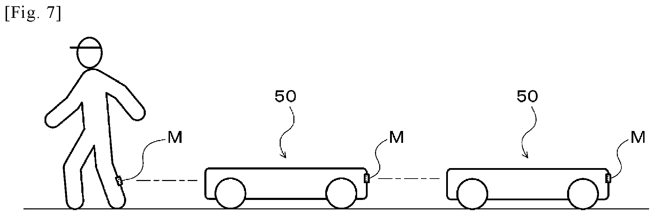

Further, as illustrated in Fig. 7, mobile robot 50 may be configured to recognize a marker M as a recognition target attached to clothes or the like of an operator or another mobile robot 50 and move following the operator or the other mobile robot 50.

Further, mobile robot 50 includes multiple mecanum wheels 51 that are rotationally driven by respective electric motors 52. Accordingly, the degree of freedom of movement of mobile robot 50 can be further increased. However, as described above, mobile robot 50 may include a wheel other than the mecanum wheel referred to as a wheel including a general rubber tire.

The invention of the present disclosure is by no means limited to the above embodiment, and it goes without saying that various changes can be made within the scope of the extension of the present disclosure. Further, the above embodiment is merely one specific aspect of the invention described in the summary of the invention, and does not limit the elements of the invention described in the summary of the invention.

### Industrial Applicability

The present disclosure can be used in a manufacturing industry or the like of a moving body that recognizes a recognition target based on imaging data of an imaging device.

### Reference Signs List

1: physical distribution center, 2: entrance, 3: shipping area, 3a, 3b, 3c, 3d, 3e, 3f, 3g, 3h, 3i, 3j, 3k, 31, 3x: shipping gate, 3m: marker, 4: conveyor, 4a, 4b, 4c, 4d, 4e, 4f, 4g, 4h, 4i, 4j, 4k, 4l, 4x: shipping line, 40: main conveyance line, 5: wheeled platform, 5m: marker, 6: storage location, 10: physical distribution management system, 11: management server, 12: storage device, 14: conveyor control device, 15: AMR management device, 20: entrance camera, 21: monitor, 25: entrance management device, 30: camera, 31: wheeled platform detector, 35: shipping gate management device, 50: mobile robot, 51: mecanum wheel, 51p: support plate, 51r: roller, 52: electric motor, 53: lifting and lowering unit, 54: camera, 55: control device, 55D: traveling control section, 55G: arithmetic processing section, 55L: lifting and lowering control section, 56: communication module, 57: storage device, M: marker, P: package, T: delivery vehicle.

## Claims

1. A moving body comprising:
an imaging device configured to image a recognition target; and
a recognition section configured to recognize the recognition target based on imaging data of the imaging device, the moving body being configured to perform a predetermined operation based on the recognition target recognized by the recognition section, the moving body further comprising:
an imaging control section configured to, when the recognition target is not recognized by the recognition section, change an imaging condition of the imaging device stepwise so that the recognition target is recognized by the recognition section, store the imaging condition when the recognition target is recognized by the recognition section in a storage device, and, when the recognition target or another recognition target is imaged by the imaging device under the same or similar situation, apply the imaging condition stored in the storage device.

2. The moving body according to claim 1, wherein
the imaging control section is further configured to, in a case where the recognition target is not recognized by the recognition section even when the imaging condition stored in the storage device is applied, change the imaging condition of the imaging device so that the recognition target is recognized by the recognition section, and store the imaging condition when the recognition target is recognized by the recognition section in the storage device.

3. The moving body according to claim 1 or 2, wherein
the moving body is configured to estimate a self-location based on the recognition target recognized by the recognition section.

4. The moving body according to any one of claims 1 to 3, wherein
the imaging condition includes at least sensitivity and an exposure time of the imaging device.

5. The moving body according to any one of claims 1 to 4, wherein
the imaging condition when the recognition target is recognized by the recognition section is shared by another moving body.

6. The moving body according to any one of claims 1 to 5, wherein
the moving body is configured to recognize the recognition target attached to a wheeled platform, and the moving body is configured to support and convey the wheeled platform.

7. The moving body according to any one of claims 1 to 5, wherein
the moving body is configured to travel on a route to a target point while recognizing multiple recognition targets arranged inside and/or outside a building.

8. The moving body according to any one of claims 1 to 5, wherein
the moving body is configured to recognize the recognition target attached to an operator or another moving body and move following the operator or the other moving body.

9. The moving body according to any one of claims 1 to 8, further comprising:
multiple mecanum wheels configured to be rotationally driven by respective corresponding electric motors.

10. A control method for a moving body including an imaging device and a recognition section, the imaging device being configured to image a recognition target, and the recognition section being configured to recognize the recognition target based on imaging data of the imaging device, the control method comprising:
changing, when the recognition target is not recognized by the recognition section, an imaging condition of the imaging device stepwise so that the recognition target is recognized by the recognition section, and storing the imaging condition when the recognition target is recognized by the recognition section in a storage device; and
applying, when the recognition target or another recognition target is imaged by the imaging device under the same or similar situation, the imaging condition stored in the storage device.
